Europäisches Patentamt

European Patent Office

Office européen des brevets

(19)

(11) Veröffentlichungsnummer : **0 168 856**
**B1**

(12) # EUROPÄISCHE PATENTSCHRIFT

(45) Veröffentlichungstag der Patentschrift :
17.05.89

(21) Anmeldenummer : 85200920.8

(22) Anmeldetag : 12.06.85

(51) Int. Cl.⁴ : **G 11 B 15/18**

(54) **Schaltmechanismus für das Laufwerk eines Magnetbandkassettengerätes.**

Teilanmeldung 88109294 eingereicht am 10.06.88.

(30) Priorität : 15.06.84 DE 3422259

(43) Veröffentlichungstag der Anmeldung :
22.01.86 Patentblatt 86/04

(45) Bekanntmachung des Hinweises auf die Patenterteilung : 17.05.89 Patentblatt 89/20

(84) Benannte Vertragsstaaten :
DE FR GB IT

(56) Entgegenhaltungen :
EP-A- 0 072 586
DE-A- 3 346 893
DE-B- 2 256 280
DE-B- 2 830 319
GB-A- 2 004 403

(73) Patentinhaber : Philips Patentverwaltung GmbH
Wendenstrasse 35 Postfach 10 51 49
D-2000 Hamburg 1 (DE)
DE
N.V. Philips' Gloeilampenfabrieken
Groenewoudseweg 1
NL-5621 BA Eindhoven (NL)
FR GB IT

(72) Erfinder : Kunze, Norbert
Mozartstrasse 7
D-6332 Ehringshausen (DE)

(74) Vertreter : Kupfermann, Fritz-Joachim, Dipl.-Ing. et al
Philips Patentverwaltung GmbH Wendenstrasse 35
Postfach 10 51 49
D-2000 Hamburg 1 (DE)

EP 0 168 856 B1

Jouve, 18, rue St-Denis, 75001 Paris, France

## Beschreibung

Die Erfindung bezieht sich auf einen Schaltmechanismus für das Laufwerk eines Magnetbandkassettengerätes mit einer gegenüber dem abzutastenden Magnetband vor und zurück verfahrenden Kopfplatte, die in der Arbeitsstellung vorgefahren durch einen ersten Verriegelungsmechanismus verriegelt ist und durch Entriegelung des ersten Verriegelungsmechanismus unter Feder-Kraft zurückfahrbar ist in eine Ruhelage, und mit einer Bedienungsstange für das Steuern der ihr zugeordneten Laufwerksfunktion, die in der betätigten Lage verriegelbar ist mittels eines zweiten Verriegelungsmechanismus, wobei beide Verriegelungsmechanismen unabhängig voneinander separat verriegelbar sind.

Ein solcher Schaltmechanismus ist aus der EP-OS 00 72 586 bekannt. Bei diesem Schaltmechanismus arbeiten die Verriegelungsmechanismen mittels Elektromagneten, die elektrisch angesteuert werden und die Verriegelung so lange aufrecht erhalten, wie die Elektromagneten erregt sind. Die Elektromagneten und die zum Ansteuern benötigten Schaltvorrichtungen sind aufwendig, erzeugen Wärme und benötigen relativ viel Raum. Insbesondere bei Autoradios kommt es darauf an, daß innerhalb des Gerätes so wenig Wärme wie möglich entwickelt wird und daß die einzelnen Funktionsbauteile einfach und klein sind.

GB-A-2 004 403 zeigt ein gemeinsamer Verriegelungselement für Wiedergabe- und Schnellaufschieber, das von einer Servoeinrichtung bei Bandende betätigt werden kann. Es ist Aufgabe der Erfindung, einen Schaltmechanismus der eingangs erwähnten Art derart zu verbessern, daß beide Verriegelungsmechanismen auf mechanische Weise verrasten und entrasten, wobei ein Zusammenwirken zwischen beiden Verriegelungsmechanismen in der Art sichergestellt ist, daß im Falle der Verriegelung beider Verriegelungsmechanismen diese gemeinsam entriegelbar sind.

Die gestellte Aufgabe ist erfindungsgemäß dadurch gelöst, daß

beide aus mechanischen Bauteilen aufgebaute Verriegelungsmechanismen beim Entriegeln miteinander kuppelbar sind,

bei gegenseitigem Kuppeln beider Verriegelungsmechanismen der zweite Verriegelungsmechanismus entriegelt wird beim Entriegeln der Kopfplatte unter dem Einfluß der die Kopfplatte zurückfahrenden Feder.

Durch den rein mechanischen Aufbau der Verriegelungsmechanismen können diese einfach und klein ausgebildet sein und in Massenproduktion beispielsweise in Kunststoff hergestellt werden. Außerdem tritt keine Wärmeentwicklung bei ihrem Betrieb auf.

Wenn bei Bandende beide Verriegelungsmechanismen verriegelt sind, dann kann durch die mechanische Kupplung auf einfache Weise beim Entriegeln der ersten Verriegelungsvorrichtung, die die Kopfplatte in der Arbeitsstellung in vorgeschobener Lage hält, zugleich mit dem Entriegelungsvorgang für die Kopfplatte auch der zweite Verriegelungsmechanismus für die Laufwerksfunktion entriegelt werden. Das hat zur Folge, daß damit immer sichergestellt ist, daß eine Stand-by-Stellung des Laufwerkes erreicht wird, in der die Kopfplatte zurückgezogen, die Andruckrolle von der Tonwelle abgehoben und die Laufwerksfunktionen stillgesetzt sind.

Nach einer weiteren Ausgestaltung der Erfindung ist vorgesehen, daß der zweite Verriegelungsmechanismus einen schwenkbaren Verriegelungshebel aufweist. Dies ist eine außerordentlich einfache Möglichkeit, die beiden Verriegelungsmechanismen zu verrasten, zu entrasten und miteinander zu kuppeln.

Nach einer weiteren Ausgestaltung der Erfindung ist vorgesehen, daß der Verriegelungshebel gegen Federkraft aus seiner Verriegelungslage verschwenkbar ist. Damit werden die Verriegelungsarme nach der Entriegelung automatisch entspannt und voneinander gelöst.

Nach einer weiteren Augestaltung der Erfindung ist vorgesehen, daß der zweite Verriegelungsarm Teil eines zweiarmigen Schwenkhebels ist, wobei der andere Arm des Schwenkhebels elastisch ausgebildet ist. Die zweite Verriegelungsvorrichtung kann damit aus einem einfachen einstückigen Kunststoffspritzteil bestehen, welches in der Lage ist, allein die Verriegelung vorzunehmen und durch Eindrücken einer anderen Bedienungsstange aus der Entriegelungslage zu verschwenken.

Nach einer weiteren Ausgestaltung der Erfindung ist vorgesehen, daß der erste Verriegelungsmechanismus ein Rasthebel mit einem mit dem Verriegelungshebel zusammenwirkenden federnd angelengkten Arm aufweist. Dabei weist der angelenkte Verriegelungsarm zwei Nasen auf, die jede für sich bei unterschiedlichen Funktionsabläufen des Laufwerkes von einem mit der Kopfplatte gekoppelten Transporthebel anstoßbar sind zum Bewegen des angelenkten Verriegelungsarmes gegen den Verriegelungshebel. Damit ist es möglich, bei verschiedenen Funktionsabläufen, die zur Folge haben, daß die Kopfplattenverriegelung aufgehoben wird, entweder über die eine Nase oder über die andere Nase das Entriegeln der zweiten Verriegelungsvorrichtung vorzunehmen. Die beiden in Betracht kommenden Funktionsvorgänge sind dabei einmal, daß bei Bandende der erste Verriegelungsmechanismus entriegelt wird, während der zweite Funktionsablauf in Betracht kommt, wenn die Stop-Bedienungsstange eingedrückt wird.

Nach einer weiteren Ausgestaltung der Erfindung ist vorgesehen, daß der Transporthebel zwei Nocken aufweist, von denen bei unterschiedlichen Funktionsabläufen des Laufwerkes die erste bzw. die zweite Nase angestoßen werden. Die beiden Nocken übernehmen dabei durch Anstoßen der Nasen bei beiden Funktionsabläufen das Auslösen der Entriegelungsvorgänge.

Im einzelnen ist dabei zum Durchführen der Funktionsabläufe zum Entriegeln vorgesehen, daß der Rasthebel von einer Stop-Bedienungsstange verkippbar ist, wobei das Kippen des Rasthebels die erste Nase des Armes aus dem Wirkungsbereich des ersten Nockens am Transporthebel bringt zur Entriegelung des ersten Verriegelungsmechanismus, wodurch die zweite Nase vom zweiten Nocken des Transporthebels angestoßen wird. Weiterhin ist vorgesehen, daß der erste Nocken als Herzkurve ausgebildet ist, die umfahrbar idt von der ersten Nase des ersten Armes und beim durch das Bandende bewirkten Herauslaufen aus der Herzkurve die erste Nase durch einen Ansatz auf dem ersten Nocken betätigt wird, was ein Schwenken des federnd angelenkten Armes zur Folge hat.

Nach einer weiteren Ausgestaltung der Erfindung ist vorgesehen, daß am Schwenkhebel ein erstes Positionierelement vorgesehen ist, das zusammenwirken kann mit einem zweiten Positionierelement, das an einem weiteren Bedienungsschieber angeordnet ist, wobei die Positionierelemente bei ihrem Zusammenwirken eine Verriegelung des zweiten Verriegelungsmechanismus verhindern bzw. die Verriegelung des zweiten Verriegelungsmechanismus unabhängig vom ersten Verriegelungsmechanismus aufheben. Somit ist für den zweiten Verriegelungsmechanismus zusätzlich zur ersten Entrastungsmöglichkeit eine vom Verriegelungszustand des ersten Verriegelungsmechanismus unabhängige weitere Entrastungsmöglichkeit gegeben.

EP-A-30 01 87 betrifft eine Teilanmeldung, die aus der vorliegenden Stammanmeldung hervorgegangen ist.

Die Erfindung wird anhand des in der Zeichnung dargestellten Ausführungsbeispieles näher erläutert. Es zeigen :

Fig. 1 eine Ansicht des Magnetbandkassettengerätes von der Antriebsseite her,

Fig. 2a eine schaubildlich vergrößerte Darstellung des Schaltmechanismus bei ausgeworfener Kassette und entriegelten Verriegelungsmechanismen,

Fig. 2b schaubildlich den Schaltmechanismus in einer Lage, in der der zweite Verriegelungsmechanismus noch verriegelt und der erste auf dem Wege ist, zu entriegeln, wobei der Entriegelungsvorgang durch das Erreichen des Bandendes ausgelöst wird,

Fig. 2c eine schaubildliche Darstellung des Schaltmechanismus, bei dem der erste Verriegelungsmechanismus in einer Lage ist, in der er gerade entriegelt wird und sich dabei so weit bewegt hat, daß er den zweiten Verriegelungsmechanismus auch gerade entriegelt,

Fig. 3a eine schematische Darstellung des Schaltmechanismus, bei dem beide Verriegelungsmechanismen verriegelt sind,

Fig. 3b den Schaltmechanismus in schematischer Darstellung, bei dem der erste Verriegelungsmechanismus bereits entriegelt ist und auf eine andere Art und Weise auf dem Wege ist, den zweiten Verriegelungsmechanismus zu entriegeln,

Fig. 4 das Magnetbandkassettengerät, von der Tonkopfseite her gesehen, bei herausgenommener Kassette und

Fig. 5 das Magnetbandkassettengerät mit der Kopfplatte in der Arbeitsstellung.

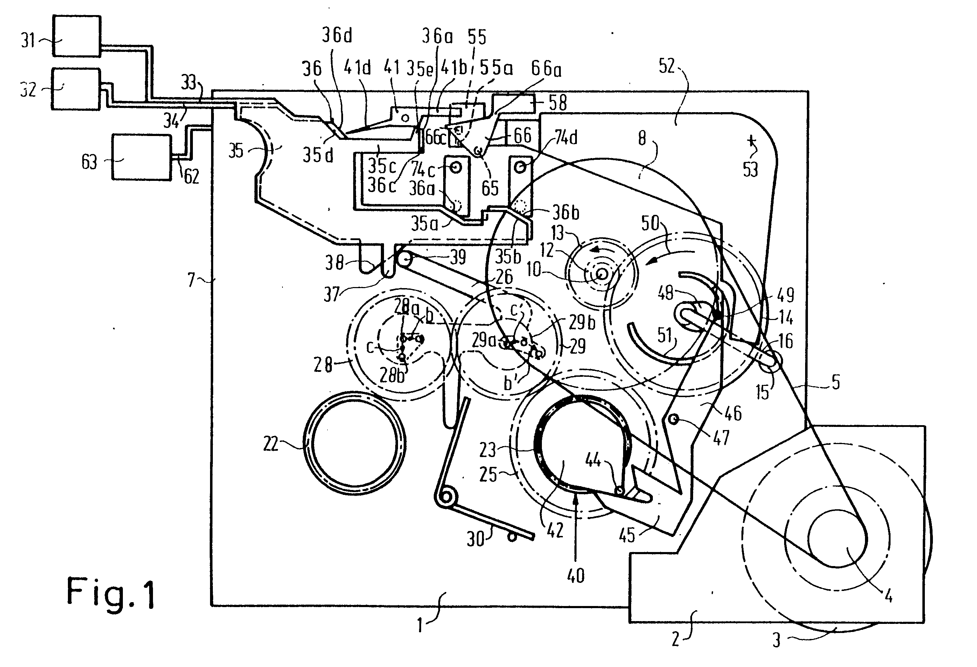

Das in Fig. 1 dargestellte Magnetbandkassettengerät weist ein Gestell 1 auf, das über eine Stütze 2 einen nur in einer Richtung umlaufenden Antriebsmotor 3 trägt. Das Antriebsritzel 4 des Motors 3 führt eine Peese 5, die auch über eine Schwungradscheibe 8 geführt ist. Die Schwungscheibe 8 ist im Gestell 1 gelagert und ist fest verbunden mit einer Tonwelle 10. Weiterhin ist die Schwungscheibe 8 mit einem Zahnrad 12 verbunden. Über eine Rutschkupplung ist koaxial zu dem Zahnrad 12 ein weiteres Zahnrad 13 auf der Schwungscheibe 8 drehbar angeordnet. Mit dem Zahnrad 12 auf der Schwungscheibe 8 ist ständig kämmend ein als Zahnrad ausgebildetes Schaltrad 14 in Eingriff. Dieses Zahnrad 14 ist schwenkbar um eine Achse 15. Die Achse 15 trägt einen in Fig. 1 schematisch dargestellten Schwenkarm 16, auf dem drehbar das Schaltrad 14 gelagert ist.

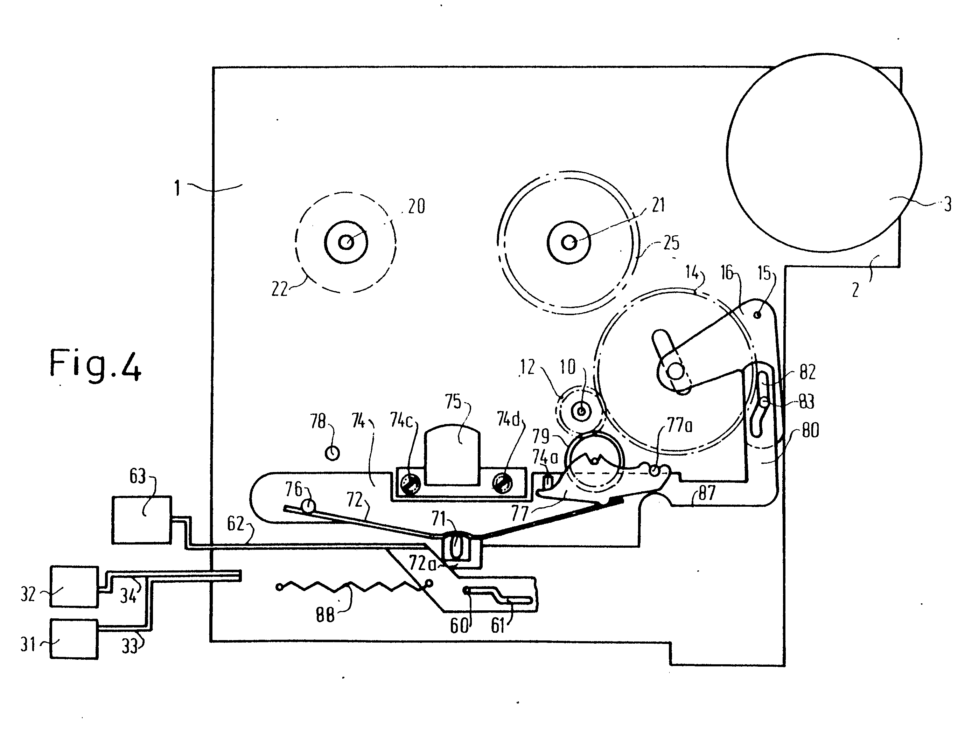

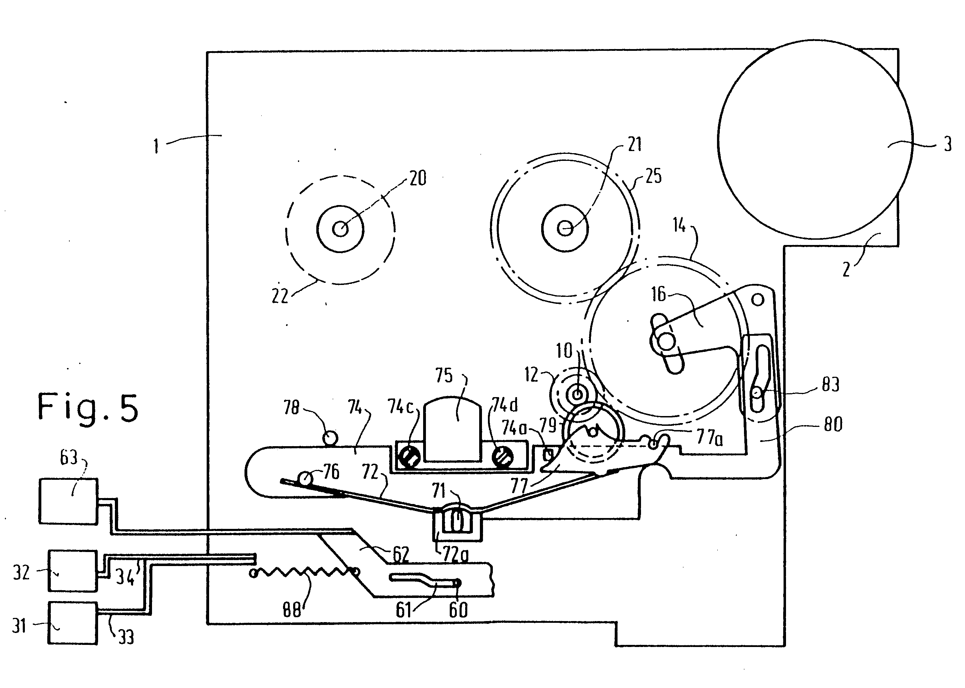

Wie auch in Fig. 4 und 5 dargestellt, sind drehbar im Gestell 1 Wickeldorne 20 und 21 gelagert. Diese Wickeldorne 20 und 21 sind fest verbunden mit Schnellspulrädern 22, 23. Über eine Rutschkupplung ist mit dem Wickeldorn 21 ein Spielrad 25 verbunden.

In Fig. 5 ist dargestellt, wie das Spielrad 25 über das Schaltrad 14 von dem Zahnrad 12 angetrieben wird.

Ein Bügel 26, der verschiebbar im Gestell 1 gelagert ist, trägt nebeneinander zwei Zahnräder 28, 29 (siehe Fig. 1). Eine Feder 30 drückt den Bügel 26 immer in eine in Fig. 1 dargestellte Ausgangsposition.

Der Bügel 26 trägt zwei Stifte 28a und 29a, die in einem dreieckigen Loch 28b bzw. einem Schlitz 29b verschiebbar sind im Gestell 1.

Zum schnellen Vor- und Rücklauf sind zwei Vor- bzw. Rücklauftasten 31 und 32 vorgesehen. Über Tastenstangen 33 und 34 sind diese Tasten 31, 32 mit Schiebern 35, 36 verbunden. Diese Schieber 35 und 36 wirken auf den Bügel 26 ein. Dazu ist der Schieber 35 mit einem Ansatz 37 versehen ; der Schieber 36 trägt entsprechend eine Auflauffläche 38. Der Ansatz 37 und die Auflauffläche 38 arbeiten auf einen Stift 39 des Bügels 26. Weiter sind die Schieber 35, 36 mit Auflaufflächen 35a, 35b bzw. 36a, 36b versehen, die auf Stifte 74c, 74d einer Kopfplatte 74 (Fig. 1, 4 und 5) arbeiten können.

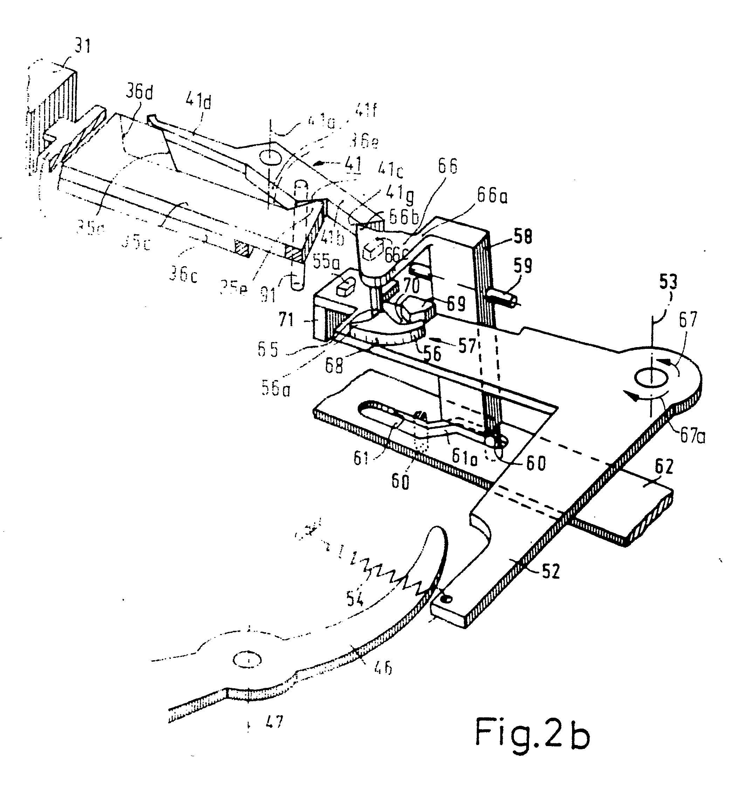

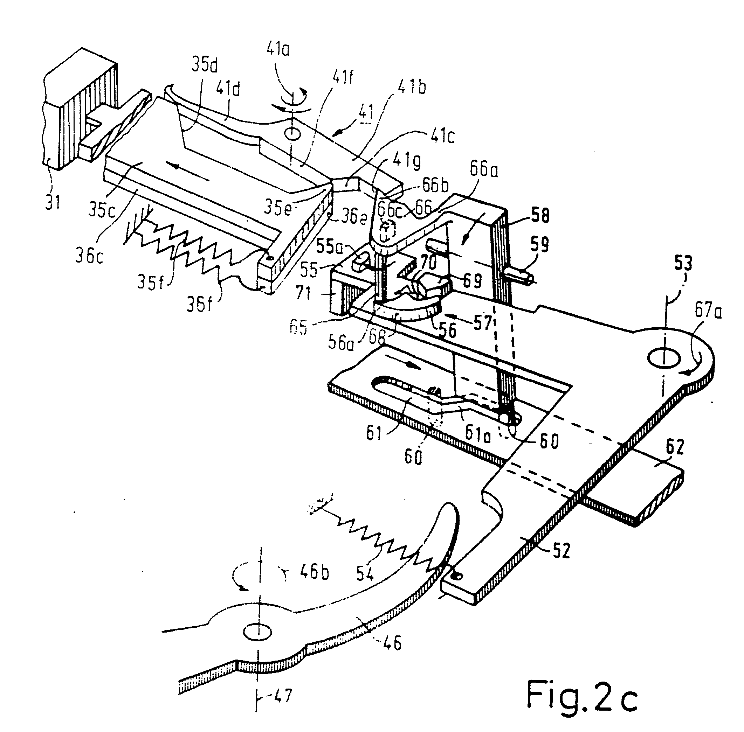

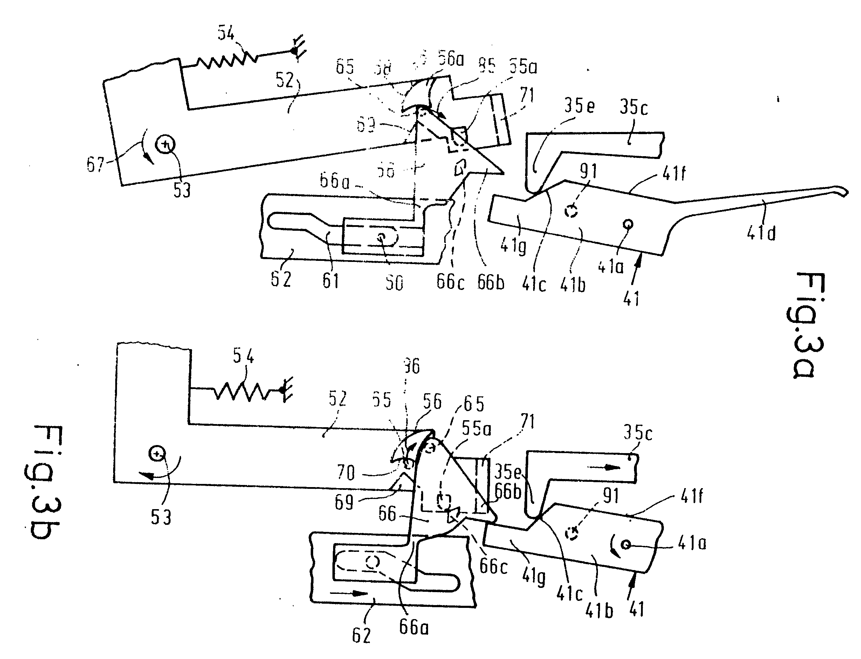

Die Schieber 35, 36 sind jeder für sich in der eingeschobenen Stellung verriegelbar (vergl. Fig. 2b und 3a). Die Schieber 35, 36 tragen Rastlaschen 35c, 36c. Diese Rastlaschen 35c, 36c haben jeweils schräge Auflaufflächen 35d, 36d und im Abstand davon Rastnasen 35e, 36e. Im folgenden wird, da beide Laschen 35c, 36c gleich ausgebildet sind, nur noch die Lasche 35c in ihrer Funktionsweise beschrieben. Beide Schieber 35 und 36 werden mit Hilfe von Federn 35f und 36f (Fig. 2c) in die Ausgangslage zurückgezogen, wenn dies nach einer Entrastung möglich ist. Zur Verriegelung der Schieber 35, 36 dient ein für beide gemeinsamer zweiarmiger Schwenkhebel 41, der um eine Achse 41a schwenkbar ist. Der zweiarmige Schwenkhebel 41, der vorzugsweise aus Kunststoff hergestellt ist, weist an einem Verriegelungsarm 41b eine schräge Kante 41c auf, hinter der beide Verriegelungsnasen 35e und 36e verrasten können. Der andere Arm 41d des Schwenkhebels 41 ist federnd elastisch ausgebildet und wirkt mit den schrägen Flächen 35d und 36d der Schieber 35, 36 zusammen. Beim Eindrücken eines der Schieber 35, 36, beispielsweise des Schiebers 35, drückt die schräge Kante 35d des Schiebers 35 den federnden Arm 41d derart beiseite, daß der Verriegelungsarm 41b im Uhrzeigersinn um die Achse 41a verschwenkt wird. Die Rastnase 35e fährt dann hinter die schräge Fläche 41c, und der Schieber 35 ist allein von dem Schwenkhebel 41 verrastet. Soll eine Entrastung vorgenommen werden, dann wird der andere Schieber 36 eingeschoben, und die schräge Kante 36d des Schiebers 36 drückt die Rastnase 36e des Schiebers 36 gegen eine Seitenwand 41f des Schwenkhebels 41. Dadurch wird der federnde Arm 41d stärker als zuvor durchgebogen, und die Rastnase 36e drückt den Verriegelungsarm 41b entgegen dem Uhrzeigersinn so weit weg, daß die Rastnase 35e von der schrägen Kante 41c frei kommt. Beide Schieber werden dann mit Hilfe der Federn 35f und 36f in ihre Ausgangslage nach außen zurückgezogen.

Der Verriegelungsarm 41b ist noch mit einem Kupplungsansatz 41g versehen, dessen Wirkungsweise später erklärt wird.

Wenn durch Eindrücken der Schnellspultaste 31 der Ansatz 37 gegen den Stift 39 des Bügels 26 drückt, kommt erst das Zahnrad 29 in Eingriff mit dem Zahnrad 13. Dabei macht der Stift 28a eine Bewegung in Richtung des Pfeiles b und der Stift 29a eine Bewegung in Richtung des Pfeiles c'. Bei weiterer Bewegung fährt der Stift 29a weiter in Richtung des Pfeiles b' und kommt das Zahnrad 29 in Eingriff mit dem Zahnrad 23. Das Magnetband wird jetzt mit dem Wickeldorn 21 schnell gewickelt. Wird die andere Schnellspultaste 32 eingedrückt, dann wirkt die Auflauffläche 38 auf den Stift 39 des Bügels 26 ein, wodurch der Stift 28a in Richtung des Pfeiles c und der Stift 29a in Richtung des Pfeiles c' fährt ; das Zahnrad 29 kommt dadurch mit dem Zahnrad 13 und das Zahnrad 28 mit dem Zahnrad 22 in Eingriff. Dadurch wird der andere Wickeldorn 20 zum Schnellspulen angetrieben.

Wenn die Kopfplatte 74 in eine Spielstellung (Arbeitsstellung) gelangt ist, nehmen die Stifte 74c, 74d die gestrichelte Lage in Fig. 1 ein. Diese Lage stimmt überein mit der Lage gemäß Fig. 5. Das Eindrücken der Bedienungsstange 33 bzw. 34 hat jetzt zur Folge, daß über die Auflauffläche 35a, 35b bzw. 36a, 36b die Stifte 74c, 74d und damit die Kopfplatte 74 nach oben geschoben werden, so daß ein Tonkopf 75 und eine Andruckrolle 79 ein wenig von dem Magnetband abgehoben werden während des Schnellspulens.

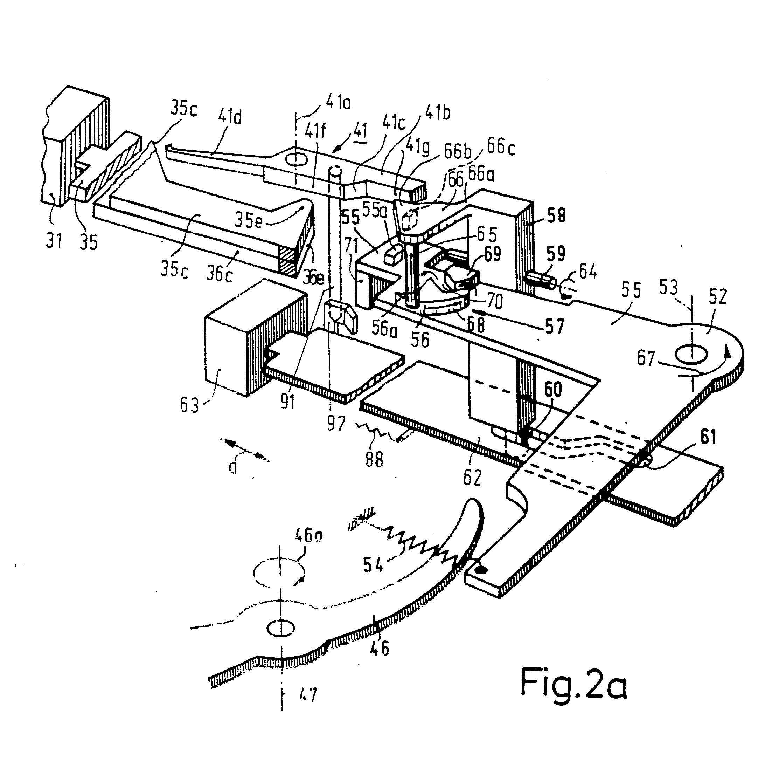

Ein Detektionsorgan 40, bestehend aus einer Scheibe 42, ist über eine Rutschkupplung mit dem Wickeldorn 21 verbunden. Auf der Scheibe 42 ist ein Stift 44 angeordnet, der innerhalb einer Schaltgabel 45 liegt. Die Schaltgabel 45 ist an einem Schaltelement 46 angeordnet, das um ein Lager 47 drehbar ist (vergl. auch Fig. 2a, 2b und 2c). Das Schaltrad 14 trägt in seiner Mitte erhaben vorstehend einen ein wenig ellipsenförmigen Nocken 48. Das Schaltelement 46 greift über das Schaltrad 14 und trägt einen Stift 49, der bei nach innen geschwenktem Schaltelement 46 um den Nocken 48 herumfahren kann bei Drehung des Schaltrades in Richtung eines Pfeiles 50. Um den Nocken 48 herum erstreckt sich in einem größeren Abstand eine erhaben aus dem Schaltrad 14 heraustehende, spiralförmige Steuerkurve 51. Auch diese Steuerkurve 51 kann mit dem Stift 49 an dem Schaltelement 46 zusammenwirken, und zwar immer dann, wenn das Detektionsorgan 60 den Bandstillstand feststellt. In diesem Fall drückt der Stift 44 nicht mehr gegen die Schaltgabel 45, wodurch der Stift 49 am Schaltelement 46 nicht mehr nach innen in Richtung auf den Nocken 48 belastet wird, sondern stehen bleibt und bei fortgehender Drehung des Schaltrades 14 in Richtung des Pfeiles 50 auf die Außenseite der Steuerkurve 51 gelangt. Weil die Steuerkurve 51 spiralförmig ist, wird das Schaltelement 46 im Uhrzeigersinn um sein Lager 47 verschwenkt, wodurch das Schaltelement 46 gegen ein Verbindungselement 52 gedrückt wird. Das Schaltelement 46 schwenkt dabei in Richtung des Pfeiles 46a (Fig. 2a).

Das Verbindungselement 52 ist ein doppelarmiger Hebel, der um ein Lager 53 schwenkbar ist. Wie aus den schaubildlichen Darstellungen in Fig. 2a, 2b und 2c zu erkennen ist, ist das Verbindungselement 52 aufgrund der Wirkung einer Feder 54 im Uhrzeigersinn federbelastet. Damit spannt die Bewegung des Schaltelementes 46 im Uhrzeigersinn die Feder 54.

Der von dem Angriffspunkt des Schaltelementes 46 abgewandte Hebelarm 55 des Verbindungselementes 52 trägt eine Herzkurve 56, die zu einem Rastmechanismus 57 gehört. Zu dem Rastmechanismus 57 gehört auch ein Rasthebel 58, der um eine Achse 59 verschwenkbar ist. Die Achse 59 liegt parallel zu der Oberfläche des Gestells 1. Der Rasthebel 58 trägt auf der von der Herzkurve 56 abgewandten Seite einen Führungsstift 60, der in einer schlitzförmigen Führungskulisse 61 eines Bedienungsschiebers oder einer Bedienungsstange 62 einer Stop/Auswurftaste 63 vorgesehen ist. Die Verschiebungsrichtung a der Bedienungsstange 62 verläuft parallel zur Achse 59, und die Stange 62 wird mittels einer Zugfeder 88 (Fig. 4, 5) in die Ausfahrrichtung gezogen. Der Führungsschlitz oder die Kulisse 61 haben einen solchen Verlauf, daß der Rasthebel 58 beim Verschieben aus der Lage in Fig. 2a nach Fig. 2b (Herausfahren der Stange 62) um die Achse 59 in Richtung eines Pfeiles 64 verschwenkt wird, wodurch ein Raststift 65 auf das Niveau der Herzkurve 56 abgesenkt wird und der Raststift 65 von der Herzkurve 56 bewegt werden kann. Das Nach-Außen-Schieben der Stop/Auswurftaste 63 bzw. der Stange 62 erfolgt durch das Einschieben einer Magnetbandkassette in das Gerät.

Fig. 2a zeigt die Stange 62 in einer eingeschobenen Stellung, während die Fig. 2b und 2c die Stange 62 in ausgeschobener Stellung zeigen.

Der Rasthebel 58 trägt über ein Filmgelenk 66a einen Verriegelungsarm 66, an dem der Raststift 65 angeordnet ist. Der Raststift 65 kann die Herzkurve 56 umfahren. In Fig. 2a (entsprechend der Lage der Stange 62 in Fig. 1 und 4) liegt der eine erste Nase bildende Stift 65 oberhalb der als erster Nocken ausgebildeten Herzkurve 56, da die Stange 62 eingedrückt ist. Wenn, wie schon erwähnt, die Stange 62 ausgefahren ist (in Fig. 5 dargestellt), kann der Stift 65 mit der Herzkurve 56 zusammenwirken. Wenn das Schaltelement 46 das Verbindungselement 52 entgegen dem Uhrzeigersinn in Richtung eines Pfeiles 67 (Fig. 2a) verschwenkt, kann der Stift 65 an einer Seitenwand 68 der Herzkurve 56 entlang laufen. Ein Führungsnocken 69 sorgt dafür, daß der Stift 65 in eine Mulde 70 der Herzkurve einfällt (Fig. 3a).

Am Hebelarm 55 ist ein Nocken 71 angeordnet. Dieser Nocken 71 wirkt, wie sich aus den Fig. 4 und 5 ergibt, mit einer Blattfeder 72 sowie einem Teil 72a der Blattfeder 72 zusammen und erstreckt sich durch einen Längsschlitz des Gestells 1 hindurch. Die Blattfeder 72 drückt mit ihrem einen freien Ende gegen eine Halterung 77, die auf einer Kopfplatte 74 um eine Achse 77a schwenkbar gelagert ist. Das andere freie Ende drückt gegen einen Stift 76 der Kopfplatte 74. Diese Kopfplatte 74 trägt in ihrer Mitte einen Tonkopf 75 und rechts des Tonkopfes 75 die Halterung 77, in der eine Andruckrolle 79 gelagert ist. Die Halterung 77 wird in der zurückgezogenen Stellung der Kopfplatte 74 gegen einen Anschlag 74a der Kopfplatte 74 gedrückt.

Die Kopfplatte 74 hat ein abgewinkeltes Ende 80. Das abgewinkelte Ende 80 weist einen Schlitz 82 auf, in dem ein Stift 83 verschiebbar ist, der auf dem Schwenkarm 16 befestigt ist. Dadurch ist in der Stellung nach Fig. 5 der Schwenkarm 16 derart um die Achse 15 verschwenkt, daß das Schaltrad 14 mit dem Spielrad 25 und dem Zahnrad 12 kämmt. Dementsprechend ist in der Stellung nach Fig. 5 die Druckrolle 79 gegen die Tonwelle 10 gedrückt, wobei die Halterung 77 vom Anschlag 74a freigekommen ist.

Die Funktionsweise des Magnetbandkassettengerätes ist wie folgt : Wird eine Kassette eingelegt, dann fährt die Bedienungsstange 62 aus der Stellung nach Fig. 2a und 4 in die Stellung nach Fig. 2b und 5. Damit wird ein nicht dargestellter Antriebsschalter geschlossen, und der zentrale Antriebsmotor 3 wird in Betrieb gesetzt. Es dreht sich nun auch die Schwungscheibe 8. Gleichzeitig dreht sich das Zahnrad 12 und das damit kämmende Zahnrad 14.

Durch das Ausfahren der Bedienungsstange 62 (aus Stellung nach Fig. 2a in Stellung nach Fig. 2b) schwenkt der Rasthebel 58 (Fig. 2a) um die Achse 59, und der Raststift 65 kommt in den Wirkbereich mit der Herzkurve 56.

Weil das Zahnrad 14 nicht in Eingriff ist mit dem Zahnrad 25, dreht der Wickeldorn 21 nicht mit. Die Scheibe 42 (Fig. 1) ist über ihre separate Reibungskupplung mit dem Wickeldorn 21 verbunden und steht damit auch still. Da beim Einbringen der Kassette ein Drehmoment auf das Schaltelement 46 fehlt, weil die Bandwickel noch nicht umlaufen und das Band still steht, bleibt das Schaltelement 46 in der in Fig. 1 dargestellten Stellung stehen und kommt damit mit dem Stift 49 auf die Außenseite der Steuerkurve 41. Damit macht das Schaltelement 46 eine Bewegung im Uhrzeigersinn gemäß Pfeil 46a in Fig. 2a und schwenkt das Verbindungselement 52 entgegen dem Uhrzeigersinn (Pfeil 67). Weil der Rasthebel 58 geschwenkt ist und der Stift 65 der Herzkurve im Wirkbereich ist, umläuft der Stift 65 nun die Wand 68 der Herzkurve 56 und fällt in die Mulde 70 ein. Damit ist das Verbindungselement in einer eingeschwenkten Stellung eingerastet (Fig. 3a). Durch das Schwenken des Verbindungselementes 52 entgegen dem Uhrzeigersinn in Richtung des Pfeiles 67 bewegt sich der Nocken 71 nach innen und drückt gegen die Blattfeder 72. Die Blattfeder 72 drückt ihrerseits über den Stift 76 und die Halterung 77 gegen die Kopfplatte 74 und schiebt die Kopfplatte 74 in Richtung auf die Tonwelle 10. In der Spiel- oder Arbeitsstellung liegt die Andruckrolle 79 an der Tonwelle 10 an. Außerdem liegt die Kopfplatte 74 an einem Anschlagstift 78 an (Fig. 5). Dies ist die Spielstellung der Kopfplatte, in der bei umlaufendem Motor 3 das Magnetband am Kopf 75 entlanggeführt wird.

Beim Erreichen des Bandendes bleibt das Band stehen. Dadurch wird das Schaltelement 46 mit seinem Stift 49 im Uhrzeigersinn (Pfeil 46a) nach außen geschwenkt. Das Verbindungselement 52 schwenkt entgegen dem Uhrzeigersinn (Fig. 3a) in Richtung des Pfeiles 67. Das Verbindungselement 52 wird bei diesem Bewegen über den Normalhub, der bei eingerasteter Lage vorliegt, in einem Überhub weitergeschwenkt. Der Überhub wird möglich, da der Nocken 71 gegen die Blattfeder 72 an der Kopfplatte 74 drückt über den Hebel 77 und den Stift 76. Damit hat der Nocken 71 einen Ausweichspielraum in Richtung auf die Kopfplatte 74. Bei diesem Überhub fährt der Stift 65 aus der Mulde 70 in Richtung eines Pfeiles 85 heraus, und der Rastmechanismus 57 entrastet. Die Steuerkurve 51 gibt jetzt den Stift 49 frei, so daß das Schaltelement 46 in Richtung des Pfeiles 46b nach Fig. 2c zurückbewegt werden kann. Dadurch kann das Verbindungselement 52 durch die Kraft der Feder 54 in Richtung des Pfeiles 67a (Fig. 2c) verschwenken. Durch den Kontakt des Raststiftes 65 mit der Herzkurve 56 wird der Verriegelungsarm 66 durch einen Ansatz 56a entgegen der Federkraft des Filmgelenkes an der Herzkurve 56 weiter im Uhrzeigersinn in Richtung des Pfeiles 85 (nach Fig. 3a) weiter geschwenkt. Ist in diesem Fall der zweite Verriegelungsmechanismus verrastet — dies entspräche der Schnelllauffunktion am Bandende —, dann stößt die Nase 66b gegen den Ansatz 41g des Schwenkhebel 41. Dadurch wird die Verrastung der Tasten 35, 36 an den Stellen 35e/36e bzw. 41c aufgehoben. Damit entrastet die Bedienungsstange 35, 36.

Gleichzeitig fährt der Nocken 71 nach außen, womit die Kopfplatte zurückgefahren wird. Der nicht dargestellte Schalter ist damit geöffnet, und der Motor 3 ist stillgesetzt.

Befindet sich die Kopfplatte 74 in der Spiel- oder Arbeitsstellung und wird gewünscht, daß schnell gespult wird, dann wird eine der Tasten 31 oder 32 eingedrückt. Wie bereits beschrieben, wird diese Taste in der eingeschobenen Stellung verriegelt mit Hilfe des zweiten Verriegelungsarmes 41b. Dabei wird auf die beschriebene Weise der Wickeldorn 20 oder der Wickeldorn 21 schnell angetrieben. Wie dieses Schnellspulen unabhängig von der Stellung der ersten Verriegelungsvorrichtung auf eine erste Weise beendet werden kann, ist bereits beschrieben, und zwar dadurch, daß man die jeweils andere Taste 32 oder 31 eindrückt, wobei sich die Verriegelung löst und beide Tasten herausfahren. Da die Kopfplatte noch immer über die Herzkurve in der Spiel- oder Arbeitsstellung verriegelt ist mittels der Herzkurve 57, wird der Schnellspulvorgang beendet und wieder in den normalen Spielvorgang übergangen.

Wird dagegen beim Schnellspulen das Bandende erreicht, dann fängt gemäß einer zweiten Entriegelungsmöglichkeit auf bereits beschriebene Weise über das Schaltelement 46 und das als Transporthebel eingesetzte Verbindungselement 52 das Entriegeln der ersten Verriegelungsvorrichtung, die aus der Herzkurve 57 und dem Stift 65 sowie dem Verriegelungsarm 66 gebildet wird, an. Dadurch wird auf ebenfalls beschriebene Weise der zweite Verriegelungsmechanismus entrastet. Der erste Verriegelungsmechanismus entriegelt damit also, ausgelöst durch das Bandende, den zweiten, Verriegelungsmechanismus, der aus den Verriegelungsnasen 35e, 36e und dem Verriegelungsarm 41b besteht. Auf diese Weise ist sichergestellt, daß auch bei eingedrückten Schnellspultasten 31, 32 diese immer entrastet werden, wenn bei Bandende der erste Verriegelungsmechanismus entriegelt wird und die Kopfplatte damit zurückfahren kann.

Eine weitere Möglichkeit der Entriegelung der Tasten 31 oder 32 ergibt sich dann, wenn bei verriegelter Kopfplatte 74 der Bedienungsschieber 62 eingedrückt wird. Der Stift 60 gelangt dabei in die gestrichelte Lage nach Fig. 2b und 2c. Der Hebel 58 kippt im Uhrzeigersinn um die Achse 59, und der Stift 65 kommt aus der Herzkurve 56 heraus. Der Stift 65 wird dabei aus dem Wirkbereich der Herzkurve 56 herausgehoben. Das Freikommen des Stiftes 65 hat zur Folge, daß der Transporthebel 52 mittels der Feder 54 um die Drehachse 53 im Uhrzeigersinn verschwenkt (Pfeil 67a). Der Hebelarm 55 ist mit einem zweiten Nocken 55a versehen, der sich nun durch das Schwenken des Verbindungselementes 52 auf eine zweite Nase 66c zu bewegt, die an der Unterseite des ersten Verriegelungsarmes 66 angeordnet ist. Der Nocken 55a stößt damit gegen die Nase 66c und dreht den Verriegelungsarm 66 im Uhrzeigersinn (Fig. 3b). Die Relativbewegung zwischen Herzkurve 56 und Raststift 65 ist in Fig. 3b durch den Pfeil 86 dargestellt. Damit stößt die Spitze 66b gegen den Kupplungsansatz 41g, und der Verrriegelungsarm 41b schwenkt um die Achse 41a gemäß Fig. 3b entgegen dem Uhrzeigersinn. Damit wird die jeweils eingedrückte Taste 31 oder 32 entriegelt. Das Eindrücken der Stoptaste 63 hat damit zur Folge, daß beide Verriegelungsmechanismen entriegelt werden, alle Tasten nach außen fahren und die Kopfplatte 74 zurückfährt. In dieser Lage ist der Bandtransport beendet, und das Gerät ist bei Laufwerken ohne Auto-Reverse-Betrieb in eine Stand-by-Stellung gebracht, wie es bei Bandende bei der zweiten zuvor beschriebenen Entriegelungsmöglichkeit auftritt.

Für eine weitere Entriegelungsmöglichkeit ist am Schwenkhebel 41 als erstes Positionierelement ein Stift 91 vorgesehen. Dieser Stift 91 arbeitet mit einer als zweites Positionierelement dienenden Lasche 92 zusammen, die am Bedienungsschieber 62 befestigt ist. Wird der Bedienungsschieber 62 eingeschoben, dann drückt die Lasche 92 gegen den Stift 91, womit der Schwenkhebel 41, falls der zweite Verriegelungsmechanismus gerastet ist, eine zum Entrasten führende Schwenkbewegung ausführt. Somit ist für den zweiten Veriegelungsmechanismus zusätzlich zur ersten Entrastungsmöglichkeit eine vom Verriegelungszustand des ersten Verriegelungsmechanismus unabhängige weitere Entrastungsmöglichkeit gegeben. Somit wird es möglich, daß das Gerät bei zurückgefahrener Kopfplatte (Stand-by-Stellung) spulen kann.

**Patentansprüche**

1. Schaltmechanismus für das Laufwerk eines Magnetbandkassettengerätes mit einer gegenüber dem abzutastenden Magnetband vor und zurück verfahrenden Kopfplatte (74), die in der Arbeitsstellung vorgefahren durch einen ersten Verriegelungsmechanismus (56, 65, 66) verriegelt ist und durch Entriegelung des ersten Verriegelungsmechanismus (56, 65, 66) unter Federkraft zurückfahrbar ist in eine Ruhelage, und mit einer Bedienungsstange (33, 34) für das Bedienen einer Laufwerksfunktion, die in der betätigten Lage verriegelbar ist mittels eines zweiten Verriegelungsmechanismus (35e, 36e, 41b), wobei beide Verriegelungsmechanismen unabhängig voneinander separat verriegelbar sind, dadurch gekennzeichnet, daß

beide aus mechanischen Bauteilen aufgebauten Verriegelungsmechanismen (56, 65, 66 ; 35e, 36e, 41b) beim Entriegeln miteinander kuppelbar sind,

bei gegenseitigem Kuppeln beider Verriegelungsmechanismen der zweite Verriegelungsmechanismus entriegelt wird beim Entriegeln der Kopfplatte (74) unter dem Einfluß der Feder (54) der Kopfplatte (74).

2. Schaltmechanismus nach Anspruch 1, dadurch gekennzeichnet, daß der zweite Verriegelungsmechanismus einen schwenkbaren Verriegelungshebel (41b) aufweist.

3. Schaltmechanismus nach Anspruch 2, dadurch gekennzeichnet, daß der Verriegelungshebel (41b) gegen Federkraft aus seiner Verriegelungslage verschwenkbar ist.

4. Schaltmechanismus nach Anspruch 3, dadurch gekennzeichnet, daß der Verriegelungshebel (41b) Teil eines mehrarmigen Schwenkhebels (41) ist, wobei der andere Arm (41d) des Schwenkhebels (41) elastisch ausgebildet ist.

5. Schaltmechanismus nach einem der Ansprüche 1 bis 3, dadurch gekennzeichnet, daß der erste Verriegelungsmechanismus ein Rasthebel (58) mit einem mit dem Verriegelungshebel (41b) zusammenwirkenden federnd angelenkten Arm (66) aufweist.

6. Schaltmechanismus nach Anspruch 5, dadurch gekennzeichnet, daß der angelenkte Arm (66) zwei Nasen (65, 66c) aufweist, die jede für sich bei unterschiedlichen Funktionsabläufen des Laufwerkes von einem mit der Kopfplatte gekoppelten Transporthebel (52) anstoßbar sind zum Bewegen des angelenkten Armes (66) gegen den Verriegelungshebel (41b).

7. Schaltmechanismus nach Anspruch 6, dadurch gekennzeichnet, daß der Transporthebel (52) zwei Nocken (56, 55a) aufweist, von denen bei unterschiedlichen Funktionsabläufen des Laufwerkes die erste bzw. die zweite Nase (65, 66c) angestoßen wird.

8. Schaltmechanismus nach Anspruch 7, dadurch gekennzeichnet, daß der Rasthebel (58) von einer Stop-Bedienungsstange (62) verkippbar ist, wobei das Kippen des Rasthebels (58) die erste Nase (65) des Armes (66) aus dem Wirkungsbereich des ersten Nockens (56) am Transporthebel (52) bringt zur Entriegelung des ersten Verriegelungsmechanismus, wodurch die zweite Nase (66c) vom zweiten Nocken (55a) des Transporthebels angestoßen wird.

9. Schaltmechanismus nach Anspruch 7, dadurch gekennzeichnet, daß der erste Nocken (56) als Herzkurve ausgebildet ist, die umfahrbar ist von der ersten Nase (65) des ersten Armes (66) und beim durch das Bandende bewirkten Herauslaufen aus der Herzkurve die erste Nase (65) durch einen Ansatz (56a) auf dem ersten Nocken (56) betätigt wird, was ein Schwenken des federnd angelenkten Armes (66) zur Folge hat.

10. Schaltmechanismus nach Anspruch 1, dadurch gekennzeichnet, daß zwei Schnellspul-Bedienungsstangen (33, 34) durch den Verriegelungshebel (41b) verriegelbar sind.

11. Schaltmechanismus nach den Ansprüchen 4 und 10, dadurch gekennzeichnet, daß am Schwenkhebel (41) ein erstes Positionierelement (91) vorgesehen ist, das zusammenwirken kann mit einem zweiten Positionierelement (92), das an einem weiteren Bedienungsschieber (62) angeordnet ist, wobei die Positionierelemente (91, 92) bei ihrem Zusammenwirken eine Verriegelung des zweiten Verriegelungsmechanismus verhindern bzw. die Verriegelung des zweiten Verriegelungsmechanismus unabhängig vom ersten Verriegelungsmechanismus aufheben.

**Claims**

1. A switching mechanism for the tape deck of a magnetic-tape-cassette apparatus comprising a head-mounting plate (74), which can be moved towards and away from the magnetic tape to be scanned, which plate is latched in the advanced operating position by a first latching mechanism (56, 65, 66) and upon release of the first latching mechanism (56, 65, 66) can return to a rest position under spring force, and an actuating rod (33, 34) for controlling a tape-deck function, which rod can be latched in the actuated position by means of a second latching mechanism (35e, 36e, 41b), which two latching mechanisms can be latched separately and independently of each other, characterized in that

the two latching mechanisms (56, 65, 66 ; 35e, 36e, 41b), which are constructed from mechanical parts, can be coupled to each other during the release, and

when the two latching mechanisms are coupled to each other the second latching mechanism is released during the release of the head-mounting plate (74) under the influence of the spring (54) of the head-mounting plate (74).

2. A switching mechanism as claimed in Claim 1, characterized in that the second latching mechanism comprises a pivotable latching lever (41b).

3. A switching mechanism as claimed in Claim 2, characterized in that the latching lever (41b) can be pivoted out of its latched position against spring force.

4. A switching mechanism as claimed in Claim 3, characterized in that the second latching lever (41b) forms part of a multi-arm pivotal lever (41), the other arm (41b) of the pivotal lever (41) being an elastic arm.

5. A switching mechanism as claimed in any one of the Claims 1 to 3, characterized in that the first latching mechanism comprises a latching lever (58) having a resiliently attached arm (66) which cooperates with the latching lever (41b).

6. A switching mechanism as claimed in Claim 5, characterized in that the attached arm (66) comprises two noses (65, 66c), which can each be actuated separately by a transport lever (52) coupled to the head-mounting plate, in order to move the attached arm (66) against the latching lever (41b) during different functional cycles of the tape deck.

7. A switching mechanism as claimed in Claim 6, characterized in that the transport lever (52) comprises two projections (56, 55a) of which the first or the second nose (65, 66c) respectively is actuated during different functional cycles of the tape deck.

8. A switching mechanism as claimed in Claims 7 and 6, characterized in that the latching lever (58) can be pivoted by a stopfunction actuating rod (62), the pivotal movement of the latching lever (58) causing the first nose (65) of the arm (66) to be moved out of the actuating range of the first projection (56) of the transport lever (52) in order to release the first latching mechanism, so that the second nose (66c) is actuated by the second projection (55a) of the transport lever.

9. A switching mechanism as claimed in Claim 7, characterized in that the first projection (56) is a heart-shaped projection around which the first nose (65) of the first arm (66) can travel and the first nose (65), during disengagement from the heartshaped projection as a result of the end of the tape being reached, is actuated by a protruding portion (56a) on the first projection (56), which results in a pivotal movement of the resiliently attached arm (66).

10. A switching mechanism as claimed in Claim 1, characterized in that two fast-wind actuating rods (33, 34) can be latched by latching lever (41b).

11. A switching mechanism as claimed in Claims 4 and 10, characterized in that the pivotal lever (41) carries a first positioning element (91) which is co-operable with a second positioning element (92) arranged on a further actuating slide (62), which positioning elements (91, 92) co-operate to prevent the second latching mechanism from being latched, or to release the second latching mechanism independently of the first latching mechanism.

**Revendications**

1. Mécanisme de commutation pour le système d'entraînement d'un appareil à cassette de bande magnétique comportant une plaque porte-tête (74) pouvant être avancée et reculée par rapport à une bande magnétique à analyser, qui, avancée dans la position de travail, est verrouillée par un premier mécanisme de verrouillage (56, 65, 66) et peut être ramenée en arrière dans une position de repos sous la sollicitation d'un ressort, par déverrouillage du premier mécanisme de verrouillage, et une tige de manœuvre pour la commande d'une fonction du système d'entraînement, qui peut être verrouillée dans la position d'actionnement au moyen d'un second mécanisme de verrouillage (25e, 36e, 41b), les deux mécanismes de verrouillage pouvant être verrouillés séparément, indépendamment l'un de l'autre, caractérisé en ce que :
les deux mécanismes de verrouillage formés d'éléments mécaniques (56, 65, 66 ; 35e, 36e, 41b) peuvent être couplés l'un à l'autre lors du déverrouillage ;
lors du couplage réciproque des deux mécanismes de verrouillage, le second mécanisme de verrouillage est déverrouillé lors du déverrouillage de la plaque porte-tête (74) sous l'influence du ressort (54) de la plaque porte-tête (74).

2. Mécanisme de commutation suivant la revendication 1, caractérisé en ce que le second mécanisme de verrouillage comporte un levier de verrouillage pivotant (41b).

3. Mécanisme de commutation suivant la revendication 2, caractérisé en ce que le levier de verrouillage (41b) peut pivoter à partir de sa position de verrouillage à l'encontre de la sollicitation d'un ressort.

4. Mécanisme de commutation suivant la revendication 3, caractérisé en ce que le levier de verrouillage (41b) fait partie d'un levier pivotant à plusieurs bras, l'autre bras (41d) du levier pivotant (41) étant d'une conformation élastique.

5. Mécanisme de commutation suivant l'une quelconque des revendications 1 à 3, caractérisé en ce que le premier mécanisme de verrouillage comporte un levier d'encliquetage (58) pourvu d'un bras (66) qui y est articulé élastiquement et coopère avec le levier de verrouillage (41b).

6. Mécanisme de commutation suivant la revendication 5, caractérisé en ce que le bras articulé (66) comporte deux becs (65, 66c) qui peuvent chacun séparément, pour diverses opérations fonctionnelles du système d'entraînement, être attaqués par un levier de transport (52) couplé à la plaque porte-tête pour déplacer le bras articulé (66) contre le levier de verrouillage (41b).

7. Mécanisme de commutation suivant la revendication 6, caractérisé en ce que le levier de transport (52) comporte deux saillies (56, 55a) par lesquelles le premier ou le second bec (65, 66c) sont attaqués pour des opérations fonctionnelles différentes du système d'entraînement.

8. Mécanisme de commutation suivant la revendication 7, caractérisé en ce que le levier d'encliquetage (58) peut basculer à l'intervention d'une tige de manœuvre d'arrêt (62), le basculement du levier d'encliquetage (58) amenant le premier bec (65) du bras (66) hors de la zone d'action de la première saillie (56) sur le levier de transport (52) en vue du déverrouillage du premier mécanisme de verrouillage, le second bec (66c) étant ainsi attaqué par la seconde saillie (55a) du levier de transport.

9. Mécanisme de commutation suivant la revendication 7, caractérisé en ce que la première saillie (56) a la forme d'une came cardioïde dont le contour peut être parcouru par le premier bec (65) du premier bras (66) et, lors de sa sortie de la came cardioïde provoquée par la fin de bande, ce premier bec (65) est actionné par un talon (56a) prévu sur la première saillie (56), ce qui provoque un pivotement du bras articulé élastiquement (66).

10. Mécanisme de commutation suivant la revendication 1, caractérisé en ce que deux tiges de manœuvre de bobinage rapide (33, 34) peuvent être verrouillées par le levier de verrouillage (41b).

11. Mécanisme de commutation suivant les revendications 4 et 10, caractérisé en ce que sur le levier pivotant (41) est prévu un premier élément positionneur (91) qui peut coopérer avec un second élément positionneur (92) monté sur un autre coulisseau de manœuvre (62), les éléments positionneurs (91, 92), lorsqu'ils coopèrent, empêchant un verrouillage du second mécanisme de verrouillage ou supprimant le verrouillage du second mécanisme de verrouillage indépendamment du premier.

Fig.1

Fig.2a

Fig.2b

3

Fig.2c

# Fig.3a

# Fig.3b

Fig.4

Fig.5